Europäisches Patentamt

European Patent Office

Office européen des brevets

(11) Numéro de publication: **0 312 140 B1**

(12) **FASCICULE DE BREVET EUROPEEN**

(45) Date de publication de fascicule du brevet: **04.03.92**

(51) Int. Cl.⁵: **C08J 9/10**, D06N 1/00,
//C08L27/06

(21) Numéro de dépôt: **88202148.8**

(22) Date de dépôt: **30.09.88**

(54) **Procédé de préparation d'un plastisol vinylique expansible.**

(30) Priorité: **12.10.87 FR 8714168**

(43) Date de publication de la demande:
**19.04.89 Bulletin 89/16**

(45) Mention de la délivrance du brevet:
**04.03.92 Bulletin 92/10**

(84) Etats contractants désignés:
**AT BE CH DE ES GB GR IT LI LU NL SE**

(56) Documents cités:
**DD-A- 91 346**
**FR-A- 2 209 824**

**CHEMICAL ABSTRACTS, vol. 102, 1985, page 38, résumé no. 204854r, Columbus, Ohio, US**

(73) Titulaire: **SOLVAY**
**Rue du Prince Albert, 33**
**B-1050 Bruxelles(BE)**

(72) Inventeur: **Preat, Jean-Luc**
**Max Havelaarlaan, 20**
**B-1850 Grimbergen(BE)**

(74) Mandataire: **Bouchoms, Maurice et al**
**Solvay Département de la Propriété Indus-**
**trielle, 310, rue de Ransbeek**
**B-1120 Bruxelles(BE)**

## Description

La présente invention concerne un procédé de préparation d'un plastisol vinylique expansible et plus particulièrement une classe d'accélérateurs de décomposition de l'agent porophore utilisé ainsi que le mode d'incorporation de ces accélérateurs dans le plastisol expansible.

Pour réaliser des structures cellulaires, utilisables notamment pour la production de revêtements tels que des revêtements de sol, il est de pratique courante de mettre en oeuvre des plastisols, généralement de nature vinylique, qui contiennent un agent porophore, généralement constitué par un composé à base d'azote et, le plus souvent, par de l'azote carbonamide, qui se décompose sous l'action de la chaleur en libérant de l'azote.

Il est également de pratique courante, ainsi qu'il est proposé notamment dans le document DD-A-91346, d'incorporer dans de tels plastisols des agents accélérateurs qui abaissent la température de décomposition de l'agent porophore tels que des oxydes métalliques, des sels d'acides gras, des sulfures, des composés de zinc tels l'oxyde de zinc, de cadmium, de plomb, l'éthanolamine.

Une classe d'accélérateur pouvant se révéler particulièrement intéressante est constituée par les sels de zinc tels le nitrate de zinc, le sulfate de zinc et notamment le chlorure de zinc qui ont la propriété d'abaisser fortement la température de décomposition de l'agent porophore. Toutefois, lorsqu'on tente d'utiliser uniquement code accélérateurs des sels de zinc et en particulier le chlorure de zinc, on constate que ceux-ci peuvent, à cause de leur grande activité, entraîner des effets secondaires indésirables tels qu'une coloration des produits et voire même l'apparition de point de dégradation. En outre, il peut arriver que ceux-ci entraînent une expansion irrégulière du plastisol avec pour conséquence la formation d'une structure cellulaire non uniforme.

Il a également été proposé, dans la demande de brevet japonais 60.06736, d'utiliser un accélérateur de décomposition complexe comprenant un sel de zinc d'acide gras, du chlorure de zinc, un alcool et des solvants. Dans ce procédé, pour obtenir des produits cellulaires satisfaisants, le chlorure de zinc doit nécessairement être préalablement dissous dans l'alcool.

La présente invention a pour objet un procédé de préparation d'un plastisol vinylique expansible à l'intervention d'un sel de zinc qui est très simple et qui conduit à des produits de qualité.

La présente invention a dès lors pour objet un procédé de préparation d'un plastisol vinylique expansible apte à donner des produits cellulaires contenant un agent porophore à base d'azote se décomposant à la chaleur et un composé de zinc code accélérateur abaissant la température de décomposition dudit agent porophore caractérisé en ce que l'accélérateur est un sel de zinc et que l'accélérateur est incorporé au plastisol sous forme d'une solution dans un véhicule liquide.

Le procédé conforme à l'invention est, de préférence, appliqué sur des plastisols à base de polymères de chlorure de vinyle. Par polymères de chlorure de vinyle, on entend les homo- et copolymères de chlorure de vinyle, ces derniers contenant au moins 50 % en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer, à titre d'exemples les esters vinyliques des acides mono- et polycarboxyliques, tels que l'acétate, le propionate, le benzoate de vinyle; les acides insaturés mono- et polycarboxyliques, tels que les acides acrylique, méthacrylique, maléique, fumarique, itaconique, ainsi que leurs esters aliphatiques, cycloaliphatiques, aromatiques, leurs amides, leurs nitriles; les halogénures d'alkyle, de vinyle, de vinylidène; les alkylvinyléthers. De préférence, les polymères de chlorure de vinyle utilisés dans le cadre de la présente invention sont les homopolymères de chlorure de vinyle, les copolymères de chlorure de vinyle et d'acétate de vinyle et les mélanges de ces copolymères entre eux ou avec un homopolymère du chlorure de vinyle.

Le plastisol vinylique expansible doit évidemment contenir au moins un plastifiant. Des plastifiants convenant pour la formation du plastisol vinylique expansible sont notamment les esters de l'acide phtalique tels que le phtalate de butyle et de benzyle, le phtalate de dioctyle, le phtalate de dialphanyle et le phtalate de diisooctyle, les esters de l'acide adipique tels que l'adipate de dioctyle, les esters de l'acide sébacique tels que le sébaçate de dioctyle et les esters de l'acide phosphorique tels que le phosphate de tricrésyle et le phosphate d'octyle et de diphényle. Les quantités de plastifiants dans le plastisol vinylique expansible peut varier dans de larges limites. Le plastifiant peut être présent, par exemple, à raison de 40 à 100 parties en poids par 100 parties en poids du polymère. De préférence, le plastifiant est présent à raison de 50 à 80 parties en poids par 100 parties en poids du polymère.

L'agent porophore peut être tout composé organique complexe qui, lorsqu'il est chauffé, se décompose en libérant de l'azote et qui laisse subsister des résidus compatibles avec le plastisol vinylique. Ces matières doivent avoir la propriété de se décomposer dans une gamme de températures étroite, ce qui est particulièrement avantageux quand on veut obtenir une bonne structure cellulaire. Des exemples d'agents porophores utilisables dans le cadre de la présente invention sont l'azodicarbonamide, l'azodicarboxylate de baryum, le p-p′-oxybis-(benzènesulfonylhydrazide) et le p-p′-oxybis-(benzènesulfonylsemicarbazide). Pour des raisons économiques, on préfère généralement mettre en oeuvre l'azodicarbonamide.

La quantité d'agent porophore dans le plastisol peut varier suivant le degré d'expansion voulu. Avantageusement, l'agent porophore est utilisé à raison de 1 à 20 parties en poids par 100 parties en poids du polymère. De préférence, l'agent porophore, par exemple l'azodicarbonamide, est utilisé à raison de 1 à 5 parties en poids par 100 parties en poids de polymère.

Le sel de zinc peut être notamment du nitrate ou du sulfate de zinc mais on préfère toutefois mettre en oeuvre du chlorure de zinc.

Suivant la température de décomposition désiré pour l'agent porophore, on incorpore le sel de zinc à raison de 0,05 à 2 parties en poids par 100 parties en poids du polymère ou des polymères présents dans le plastisol.

Le plastisol peut en outre comprendre des additifs usuels tels que notamment des stabilisants convenant pour réduire la dégradation du polymère sous l'effet de la chaleur et de la lumière, des pigments ou colorants et des charges.

Dans le procédé conforme à l'invention, les sels de zinc, qui se présentent généralement sous forme solide cristalline, doivent être préalablement dissous dans un véhicule liquide. Dans la mesure où les sels de zinc sont solubles dans des véhicules liquides, on obtient les meilleurs résultats en utilisant l'accélérateur sous forme de solution. Cette solution doit être compatible dans une mesure suffisante avec le plastisol vinylique expansible. Des solvants appropriés sont les cétones, comme le tétrahydrofuranne, le cyclohexanone, la méthyléthylcétone, des esters, comme l'acétate d'éthyle, des hydrocarbures chlorés comme le dichlorure d'éthylène, le chlorure de méthylène et l'eau. De préférence, le sel de zinc est utilisé en solution aqueuse. Le sel de zinc est dissous dans de l'eau à raison de 50 à 200 parties en poids par 100 parties en poids d'eau.

Il a encore été constaté que lorsque le plastisol vinylique expansible contient un copolymère de chlorure de vinyle et d'acétate de vinyle, on peut en outre améliorer sensiblement la qualité des produits cellulaires obtenus selon le procédé de l'invention en incorporant un polyol dans le plastisol expansible. Le polyol utilisé est, de préférence, un triol et peut être le glycérol, le di-triméthylolpropane ou un mélange des deux. Le polyol est utilisé à raison de 0,1 à 1,5 parties en poids par 100 parties en poids du polymère.

La préparation des plastisols vinyliques expansibles se fait généralement dans un mélangeur de type conversionnel qui peut être un mélangeur planétaire ou un mélangeur à turbine. Le plastisol vinylique expansible obtenu est soumis, si besoin est, à une filtration sur tamis ou à un affinage par passage sur un broyeur à trois cylindres et éventuellement à un débullage sous pression réduite. Le plastisol vinylique expansible ainsi préparé est prêt à être utilisé pour la fabrication de revêtements par enduction.

Pour réaliser la structure cellulaire désirée, le plastisol préalablement gélifié à chaud peut être chauffé de différentes manières, par exemple par passage dans un four à air chaud ou au moyen d'un appareil à rayonnement infrarouge. Le plastisol vinylique expansible est chauffé à une température supérieure à la décomposition de l'agent porophore en présence de l'accélérateur et de préférence à 140-210°C. La durée pendant laquelle le plastisol vinylique est chauffé dépend de la température et du degré de décomposition de l'agent porophore voulu. Cette durée est de préférence de 10 à 300 secondes.

L'invention est en outre illustrée par les exemples de réalisation pratiques donnés ci-après.

Exemple 1

On prépare un plastisol vinylique expansible dont la composition en parties en poids est la suivante :

| | |
|---|---|
| - Poly(chlorure de vinyle) | 100 |
| - Phtalate de di-éthyle-2 hexyle | 70 |
| - Carbonate de calcium | 25 |
| - Dioxyde de titane | 3 |
| - Azodicarbonamide commercialisé par Schering Chemicals Co. sous la marque Génitron ACSP4 | 3 |
| - Chlorure de zinc en solution aqueuse à raison de 5 parties en poids de chlorure de zinc pour 3 parties d'eau. | 0,40 |

Après introduction de la solution aqueuse de chlorure de zinc dans le plastisol vinylique, on chauffe l'ensemble à 200°C pour provoquer l'expansion du plastisol vinylique. L'épaisseur de la couche de plastisol, qui, avant gonflement, était de 1 mm, passe à 2,7 mm après 1 minute de chauffage. Après 1 min 30 de chauffage, l'épaisseur devient 4,8 mm et après 2 minutes, l'épaisseur atteint 5,2 mm. Le produit cellulaire obtenu est constitué de fines cellules uniformes et présente une coloration blanche uniforme. On détermine alors l'indice de jaune (IJ) du matériau cellulaire obtenu au moyen d'un photomètre en utilisant la relation

$$IJ = \frac{R - B}{V}$$

dans laquelle R, B et V représentent respectivement la réflectence en lumière rouge, bleue et verte exprimée en % par rapport au sulfate de baryum. Le produit cellulaire obtenu présente un indice de jaune égal à 12. La dissolution préalable du chlorure de zinc dans un minimum d'eau avant l'introduction dans le plastisol suivant l'invention élimine donc le problème de l'apparition des points bruns et accentue l'efficacité de cet accélérateur.

Exemple 2

On prépare un plastisol vinylique expansible dont la composition en parties en poids est la suivante :

| | |
|---|---|
| - Copolymère du chlorure de vinyle et d'acétate de vinyle contenant 4 % en poids d'acétate de vinyle | 75 |
| - Poly(chlorure de vinyle) | 25 |
| - Phtalate de di-éthyle-2 hexyle | 60 |
| - Phtalate de butyle et de benzyle | 10 |
| - Carbonate de calcium | 50 |
| - Azodicarbonamide commercialisé par Schering Chemicals Co. sous la marque Génitron AC4 | 1,7 |
| - Chlorure de zinc en solution aqueuse contenant 5 parties en poids de chlorure de zinc pour 3 parties en poids d'eau. | 0,8 |

Après introduction de la solution aqueuse de chlorure de zinc dans le plastisol vinylique, on chauffe l'ensemble à 170°C pendant 3 minutes pour provoquer l'expansion du plastisol vinylique. L'épaisseur de la couche de plastisol, qui, avant gonflement, était de 0,5 mm, passe à 1,25 mm. Le taux d'expansion est égal à 2,5 et la densité après expansion est égale à 0,49 g/cm$^3$. Il se forme un produit cellulaire constitué de fines cellules uniformes. L'indice de jaune mesuré comme dans l'exemple 1 s'élève à 39.

Exemple 2R

Cet exemple est donné à titre de comparaison. On a répété l'exemple 2, mais en utilisant le chlorure de zinc tel quel, c'est-à-dire non préalablement dispersé dans de l'eau, à raison de 0,5 partie en poids. On chauffe l'ensemble à 170°C pendant 3 minutes pour provoquer l'expansion du plastisol vinylique. L'épaisseur de la couche de plastisol, qui, avant gonflement, était de 0,5 mm, passe à 1,25 mm. Le taux d'expansion est égal à 2,3 et la densité après expansion est égale à 0,55 g/cm$^3$. On constate toutefois que l'introduction du chlorure de zinc sous forme de cristaux provoque une coloration brunâtre et de nombreux points de dégradation locaux dus à une mauvaise répartition du chlorure de zinc.

Exemple 3

On a répété l'exemple 2, mais en introduisant en plus dans le départ 0,5 partie en poids de di-triméthylolpropane.
On chauffe l'ensemble à 170°C pendant 3 minutes pour provoquer l'expansion du plastisol vinylique. L'épaisseur de la couche de plastisol, qui, avant gonflement, était de 0,5 mm, passe à 1,30 mm. Il se forme un produit cellulaire constitué de fines cellules uniformes et d'une bonne coloration initiale. L'indice de jaune mesuré comme dans l'exemple 1 s'élève à 24.

Exemple 4

On a répété l'exemple 2, mais en incorporant en plus dans la composition 0,5 partie en poids de glycérol.

On chauffe l'ensemble à 170°C pendant 3 minutes pour provoquer l'expansion du plastisol vinylique. L'épaisseur de la couche de plastisol, qui, avant gonflement, était de 0,5 mm, passe à 1,65 mm. L'indice de jaune mesuré comme dans l'exemple 1 est égal à 35. L'incorporation de glycérol dans le plastisol vinylique expansible améliore l'effet d'accélérateur du chlorure de zinc.

Exemple 5

On a répété l'exemple 2, mais en incorporant en plus dans la composition 0,3 partie en poids de glycérol et 0,3 partie en poids de di-triméthylolpropane.

Après chauffage à 170°C pendant 3 minutes, l'épaisseur de la couche de plastisol passe de 0,5 mm à 1,90 mm. Le taux d'expansion est égal à 3,8. L'indice de jaune est égal à 27. L'incorporation de glycérol et de di-triméthylpropane à la composition vinylique expansible suivant l'invention améliore l'efficacité du chlorure de zinc comme accélérateur de décomposition d'agent porophore et donne un produit cellulaire exempt d'une coloration non souhaitée.

**Revendications**

1. Procédé de préparation d'un plastisol vinylique expansible apte à donner des produits cellulaires contenant un agent porophore à base d'azote se décomposant à la chaleur et un composé de zinc comme accélérateur abaissant la température de décomposition dudit agent porophore, caractérisé en ce que l'accélérateur est un sel de zinc et en ce que l'accélérateur est incorporé dans le plastisol sous forme d'une solution aqueuse.

2. Procédé suivant la revendication 1, caractérisé en ce que le sel de zinc est le chlorure de zinc.

3. Procédé suivant la revendication 1, caractérisé en ce que le plastisol expansible contient un copolymère de chlorure de vinyle et d'acétate de vinyle et en ce qu'on incorpore en outre un polyol, choisi dans le groupe formé par le glycérol, le di-triméthylolpropane et leurs mélanges, dans le plastisol.

**Claims**

1. Process for the preparation of an expandable vinyl plastisol capable of yielding cellular products containing a nitrogen-based blowing agent decomposing when heated and a zinc compound as accelerator lowering the decomposition temperature of the said blowing agent, characterised in that the accelerator is a zinc salt and in that the accelerator is incorporated into the plastisol in the form of an aqueous solution.

2. Process according to Claim 1, characterised in that the zinc salt is zinc chloride.

3. Process according to Claim 1, characterised in that the expandable plastisol contains a copolymer of vinyl chloride and of vinyl acetate and in that a polyol chosen from the group consisting of glycerol, bistrimethylolpropane and mixtures thereof is additionally incorporated in the plastisol.

**Patentansprüche**

1. Verfahren zur Herstellung eines schäumbaren vinylischen Plastisols, das sich dafür eignet, zellförmige Produkte zu ergeben, das ein Treibmittel auf der Basis von Stickstoff, das sich bei Wärme zersetzt und eine Zinkverbindung als Beschleuniger, die die Zerfallstemperatur des Treibmittels senkt, enthält, dadurch gekennzeichnet, daß der Beschleuniger ein Zinksalz ist und, daß der Beschleuniger in das Plastisol in Form einer wässrigen Lösung eingearbeitet wird.

2. Verfahren nach Anspruch 1, dadurch gekennzeichnet, daß das Zinksalz Zinkchlorid ist.

3. Verfahren nach Anspruch 1, dadurch gekennzeichnet, daß das schäumbare Plastisol ein Copolymer von Vinylchlorid und von Vinylacetat enthält und, daß man außerdem ein Polyol, ausgewählt aus der Gruppe gebildet durch das Glyzerin, das Di-Trimethylolpropan und deren Mischungen, in das Plastisol

einarbeitet.